Europäisches Patentamt

European Patent Office

Office européen des brevets

(19)

(11) Publication number: **0 194 609**
A2

(12) **EUROPEAN PATENT APPLICATION**

(21) Application number: 86103062.5

(22) Date of filing: 07.03.86

(51) Int. Cl.⁴: **B 08 B 15/00**

(30) Priority: 15.03.85 IT 1245785

(43) Date of publication of application:
17.09.86 Bulletin 86/38

(84) Designated Contracting States:
AT BE CH DE FR GB LI LU NL SE

(71) Applicant: ASPIRGAS S.r.L.
Via Privata Piazza Generale Negri da Sanfront 11 - F
I-16043 Chiavari(IT)

(72) Inventor: Canale, Giacomino
Via Aldo Gastaldi 81/27
I-16043 Chiavari(IT)

(74) Representative: Porsia, Bruno et al,
c/o Succ. Ing. Fischetti & Weber Via Caffaro 3/2
I-16124 Genova(IT)

(54) Apparatus for drawing gas out of closed spaces, such as automobil workshops and garages.

(57) The object of the present invention is an apparatus for drawing polluting gases out of closed spaces, particularly for drawing exhaust gases from autovehicles out of automobile workshops, garages, and similar premises, characterized in that it comprises at least one ceiling- or wall-fixed manifold duct (1) connected to at least one manifold duct (2) which is arranged at right angles therewith, and is translatable therealong, with the said movable duct (2) there being slidably connected one or more gas collecting devices (5, 6) which can be then moved in perpendicular directions, so that they can be positioned in any desired point of the room in which the apparatus is installed.

EP 0 194 609 A2

./...

Croydon Printing Company Ltd.

Fig.1

ASPIRGAS S.r.l., Chiavari

Apparatus for drawing gas out of closed spaces, such as automobile workshops and garages.

The present invention concerns the apparatus for drawing polluting gases out of closed spaces, for example, exhaust gases from autovehicles out of automobile workshops, garages, and premises for a similar use. More particularly, the invention refers to those apparatus comprising a ceiling- or wall-arranged overhead duct under vacuum from which a plurality of devices that are adapted for collecting gases at the exhaust pipes of autovehicles, are generally branched off.

Till now, in order to serve any usable point of the room in which it is installed, a purifying apparatus of this kind is provided with an overhead duct system that often is a rather complicated one, and along which the said gas collecting devices that are pneumatically connected thereto, can be moved.

The present invention aims to simplify the overhead duct system of a purifying apparatus of the type as initially disclosed, while enabling it to reach any zone of the room in which it is installed.

0194609

For this purpose, a gas suction apparatus according to the invention, comprises at least one ceiling- or wall-fixed manifold duct connected to at least one manifold duct which is arranged at right angles therewith, and is translatable therealong, with the said movable duct there being slidably connected one or more gas collecting devices which can be then moved in perpendicular directions, so that they can be positioned, within certain limits, in any desired points of the room.

Other features of the gas suction apparatus according to the invention are contained in the Dependant Claims. Some preferred embodoments of the invention will be described hereinafter by way of examples, and by referring to the annexed drawings, in which:

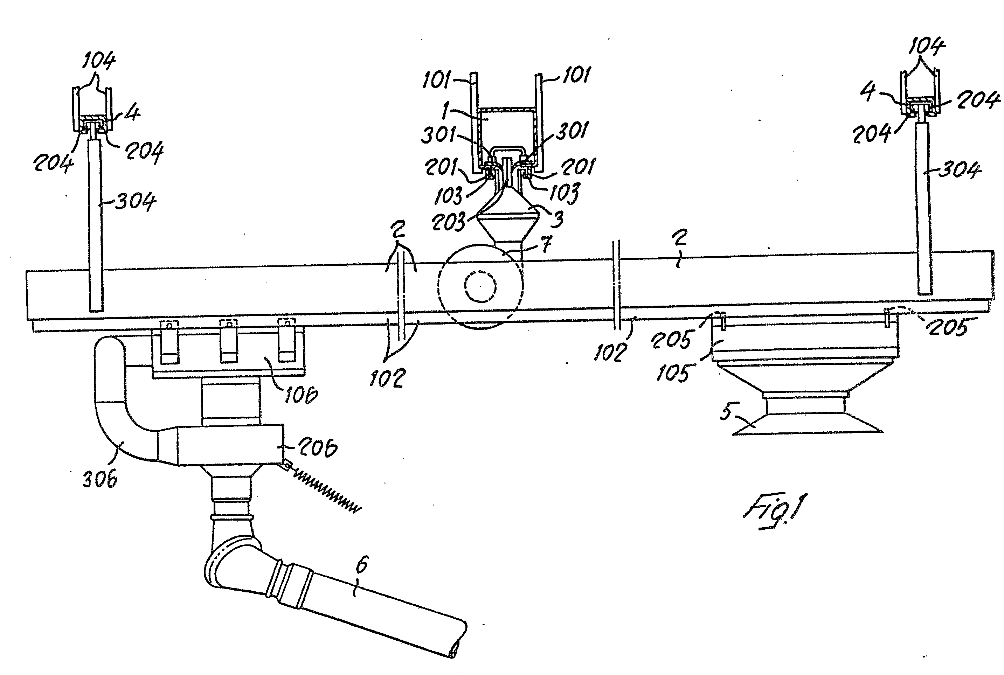

Figure 1 is an elevational view with parts in section, diagrammatically showing an apparatus according to the invention.

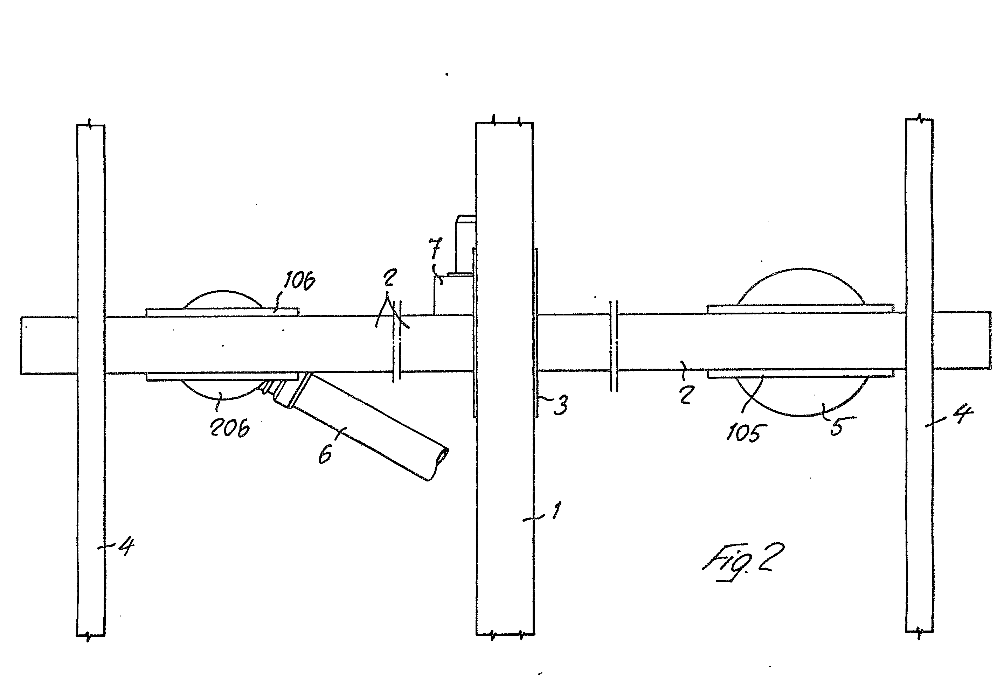

Figure 2 is a corresponding diagrammatic top view of the said apparatus.

Referring to the drawings, an apparatus according to the invention for drawing noxious gases out of closed spaces, particularly exhaust gases from autovehicles out of automobile workshops, garages, and similar premises, comprises a first rectilinear manifold duct 1, which is generally fixed to the ceiling, for example by means of brackets 101, and has its underside communicating with a second rectilinear manifold duct 2 arraged at right angles therewith, and which is translatable therealong.

The connection between the two ducts 1 and 2 is made through a connection box 3 which is secured to duct 2 and is provided with wheels 103 engaged in rails 201 mounted onto the lower wall of duct 1. The box 3 comprises at the top a hollow head 203 with a flat mouthpiece, which is slidingly fitted between two flexible lips 301 that normally keep tightly closed a longitudinal continuous slot formed in the lower wall of duct 1, between the two rails 201 therefor.

The function of slidingly supporting the duct 2 is performed not only by duct 1, but also by lateral guides 4 which are parallel to duct 1 and which, similarly to this duct, are anchored to the ceiling by means of brackets 104, in the said guides there being slidably engaged the pairs of wheels 204 fitted onto the ends of vertical rods 304 made integral with the said duct 2.

Also the duct 2 has in its lower wall a continuous longitudinal slot which is normally tightly closed by two resilient lips, and this duct is provided with rails 102 along which there can be slid one or more devices of any desired type, for collecting noxious gases at the outlet of autovehicles exhaust pipes and for delivering them to the manifold ducts 2 and 1 under vacuum. The said gas collecting devices can be moved in perpendicular directions so as to be caused to reach any desired point of the room.

In the first embodiment, which is disclosed merely by way of an example, a gas collecting device according to the invention may consist of a box 105 provided with wheels 205 for sliding it along guides 102, and comprising a flat hollow head (not shown) which is slidingly fitted between the said lexible lower lips (also not shown) in duct 2, a wide intake mouth 5, also called "hood", being mounted onto the said box. This embodiment may be carried out for sucking exhaust gases from exhaust pipes arranged on the top of busses, such as, for example, certain models of busses.

In one second embodiment, a gas collecting device according to the invention, instead consists of a wheel-mounted box 106 carrying an articulated tubular arm 6 that forms the object of another Patent of the same Patentee. The said articulated arm 6 may be provided with its own centrifugal aspirator 206 which through a connection duct 306 is connected to the supporting box 106.

The duct 2 and the gas collecting devices may be moved bt hand, or by means of motors.

In the case in which the duct 2 is not much extended in length, it can be supported at one end by the main duct 1 and at the other end by only one guide 4.

Of course, with the stationary main duct 1 it is possible to associate a plurality of movable secondary ducts 2.

The centrifugal aspirator means 7 may be either applied to duct 2, preferably between this duct and the relative connection box 3, or directly to the manifold duct 1.

From what has been set forth hereinabove, it appears evident that as compared with similar conventional apparatus, the gas suction apparatus according to the invention, affords a number of advantages, among which:

- the possibility of reaching any desired zone of the room in which the apparatus is installed,

- an extremely simple construction and installation,

- a very simple and quick move.

CLAIMS

1. An apparatus for drawing polluting gases out of closed spaces, particularly for sucking exhaust gases from autovehicles out of automobile workshops, garages, and similar premises, characterized in that it comprises at least one ceiling- or wall-fixed manifold duct (1) connected to at least one manifold duct (2) which is arranged at right angles therewith, and is translatable therealong, with the said movable duct (2)there being slidably connected one or more gas collecting devices (5, 6) which can be then moved in perpendicular directions, so that they can be positioned in any desired points of the room in which the apparatus is installed.

2. The apparatus according to Claim 1, characterized in that the means for connecting the stationary duct (1) to the movable duct (2) consists of a connection box (3) which is secured to the movable duct (2) and communicates with the same, and which is provided with wheels (103) that are engaged in longitudinal rails (201) mounted onto the underside of the stationary duct (1), the said box (3) comprising at the top a hollow head (203) with a flat mouthpiece which is slidingly fitted between two flexible lips (301) that normally keep tightly closed a continuous longitudinal slot formed in the lower wall of the stationary duct, between the rails (201) therefor.

3. The apparatus according to Claim 1 and 2, characterized in that one or more guides (4) are provided, which are arranged parallel to the stationary duct (1), and which, similarly to this duct, are anchored to the ceiling or a wall, and these guides (4) are meant for slidingly supporting the movable duct (2) by means of suitable rods (304) with wheels (204) carried by this latter duct.

4. The apparatus according to Claims 1 to 3, characterized in that at least one of the gas collecting devices consists of a box (105) provided with wheels (205) for sliding it along longitudinal guides (102) carried by the underside of the movable duct (2), and comprising a hollow flat head which is slidingly fitted between two flexible lips that normally keep tightly closed a continuous longitudinal slot formed in the lower wall of said movable duct (2), a wide suction mouth (5), also called "hood", being mounted onto the said box (105).

5. The apparatus according to Claims 1 to 3, characterized in that at least one of the gas collecting devices consists of a wheel-mounted box (106) communicating with the movable duct (2) and carrying an articulated tubular arm (6) or a similar suction member.

6. The apparatus according to Claim 5, characterized in that the articulated arm (6) is provided with its own centrifugal aspirator (206) which through a connection duct (306) is connected to the box.

7. The apparatus according to the preceding Claims, characterized by suction means (7) provided between the movable duct (2) and the stationary duct (1), in correspondence of the relative connection means (3).

Fig.1

Fig.2